# EUROPÄISCHE PATENTANMELDUNG

(11) **EP 1 420 268 A1**
(43) Veröffentlichungstag der Anmeldung: **19.05.2004**
(21) Anmeldenummer: 03104143.7
(22) Anmeldetag: 11.11.2003
(51) Int. Cl.: G01S 17/08, G01C 3/06

(54) **Handhabbares Laserentfernungsmessgerät**

(30) Priorität: 13.11.2002 DE 10252743
(71) Anmelder: HILTI Aktiengesellschaft, 9494 Schaan (LI)
(72) Erfinder: Gogolla, Torsten, 9494 Schaan (LI); Winter, Andreas, 6800 Feldkrich (AT); Kuhlmann, Dietmar Fritz Karl, 9434 Au (CH)
(74) Vertreter: Wildi, Roland

(57) **Zusammenfassung**

Ein handhabbares Laserentfernungsmessgerät (1) mit einem optoelektronischen Sender (2a) und Empfänger (2b) sowie an einem handlichen Gehäuse (3) angeordnete Eingabemittel (4) und Ausgabemittel (5), die zumindest teilweise an einer Deckfläche (6) angeordnet sind, wobei zumindest ein den Messvorgang auslösendes Zusatzeingabemittel (7) an einer an der Deckfläche (6) angrenzenden Seitenfläche (8) angeordnet ist.

## Beschreibung

Die Erfindung bezeichnet ein handhabbares Laserentfernungsmessgerät, insbesondere einen Baulaserentfernungsmessser.

Üblicherweise weisen handhabbare Laserentfernungsmessgeräte einen optoelektronischen Sender und Empfänger sowie an einem handlichen Gehäuse angeordnete Eingabemittel wie Schalter und Tasten und Ausgabemittel wie Flüssigkeitsdisplays auf.

Nach der DE 10055510 weist ein handhabbares Laserentfernungsmessgerät die Eingabemittel und Ausgabemittel ausschliesslich an der flachen Deckseite eines im Wesentlichen quaderförmigen Gehäuses auf. In bestimmten Messsituationen, bspw. bei Überkopf-Messungen, welche im Baugewerbe bei Messungen an Wänden nahe der Decke regelmässig vorkommen, ist bei simultaner Betrachtung des Flüssigkeitsdisplays eine einhändige Handhabung und Betätigung der den Messvorgang auslösenden Messtaste schier unmöglich, da der dazu ergonomische seitliche Klemmgriff des Gehäuses zwischen Daumen und den übrigen Fingern keine simultane Betätigung der Messtaste zulässt.

Zudem weist nach der DE4121625 ein handhabbares Gasmessgerät eine nahe dem seitlichen Rand in einer Fingermulde angeordnete Messtaste auf, wodurch diese zusätzlich zur frontalen Betätigung auch bei einer rückseitigen Umfassung des Gehäuses mit der Handfläche von einem Finger betätigbar ist. Diese Handhabung ist für Überkopf-Messungen ungeeignet.

Die Aufgabe der Erfindung besteht in der Realisierung eines handhabbaren Laserentfernungsmessgerätes für ergonomische Überkopf-Messungen.

Die Aufgabe wird im Wesentlichen durch die Merkmale der unabhängigen Ansprüche gelöst. Vorteilhafte Weiterbildungen ergeben sich aus den Unteransprüchen.

Im Wesentlichen weist ein handhabbares Laserentfernungsmessgerät einen optoelektronischen Sender und Empfänger sowie an einem handlichen Gehäuse angeordnete Eingabemittel und Ausgabemittel auf, die zumindest teilweise an einer Deckfläche angeordnet sind, wobei zumindest ein den Messvorgang auslösendes Zusatzeingabemittel an einer an der Deckfläche angrenzenden Seitenfläche angeordnet ist.

Durch die Anordnung zumindest eines, den Messvorgang auslösendes Zusatzeingabemittels an einer an der Deckfläche angrenzenden Seitenfläche, ist im Falle einer Überkopf-Messung dieser simultan zu einer ergonomischen Halterung des Gehäuses im seitlichen Klemmgriff von einem Finger betätigbar.

Vorteilhaft ist das Zusatzeingabemittel ein Drucktaster, wodurch dessen Betätigung längs der ergonomischen Fingerbewegung erfolgt.

Vorteilhaft ist das Zusatzeingabemittel mit dem zugeordneten, den Messvorgang auslösenden, Eingabemittel logisch OR verknüpft, wodurch eine alternative Betätigung möglich ist.

Vorteilhaft ist die Position des Zusatzeingabemittels mit einer, weiter vorteilhaft leuchtenden, Markierung auf der Deckfläche sichtbar gekennzeichnet, wodurch ein suchendes Abtasten unterstützt wird.

Die Erfindung wird bezüglich eines vorteilhaften Ausführungsbeispiels näher erläutert mit einer Darstellung eines handhabbaren Laserentfernungsmessgerätes.

Nach der Darstellung weist ein handhabbares Laserentfernungsmessgerät 1 einen optoelektronischen Sender 2a und Empfänger 2b für einen sichtbaren Lasermessstrahl sowie an einem handlichen, quaderförmigen Gehäuse 3 angeordnete Eingabemittel 4 in Form von Modiwahlschaltern und dem Hauptmesstaster und Ausgabemittel 5 in Form einer Flüssigkristallanzeige auf, die zumindest teilweise an einer Deckfläche 6 angeordnet sind, wobei zumindest ein, den Messvorgang auslösendes, Zusatzeingabemittel 7 an einer an der Deckfläche 6 angrenzenden Seitenfläche 8 angeordnet ist. Das Zusatzeingabemittel 7 ist ein Drucktaster, welcher mit der, den Eingabemitteln 4 zugeordneten, Hauptmesstaste logisch OR verknüpft ist. Die Position des Zusatzeingabemittels 7 ist mit einer fluoreszierenden Markierung 9 auf der Deckfläche 6 sichtbar gekennzeichnet.

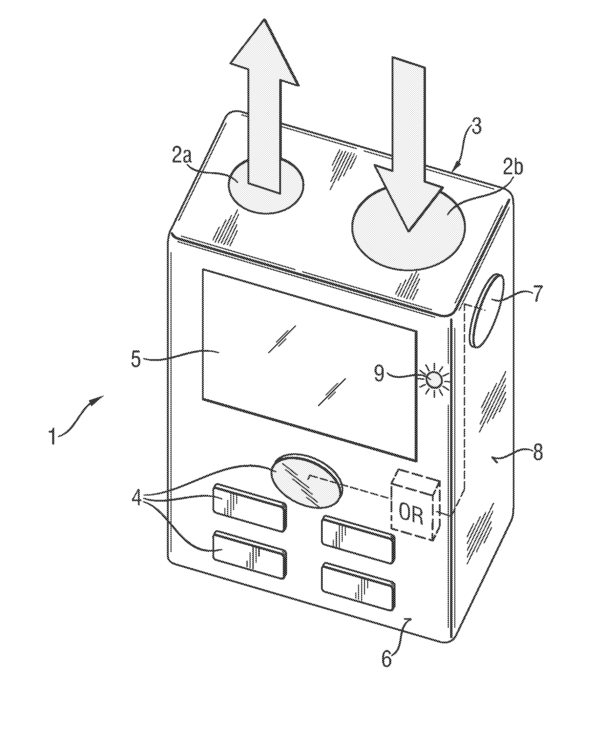

## Patentansprüche

1. Handhabbares Laserentfernungsmessgerät mit einem optoelektronischen Sender und Empfänger (2) sowie an einem handlichen Gehäuse (3) angeordnete Eingabemittel (4) und Ausgabemittel (5), die zumindest teilweise an einer Deckfläche (6) angeordnet sind, **dadurch gekennzeichnet, dass** zumindest ein den Messvorgang auslösendes Zusatzeingabemittel (7) an einer an der Deckfläche (6) angrenzenden Seitenfläche (8) angeordnet ist.

2. Laserentfernungsmessgerät nach Anspruch 1, **dadurch gekennzeichnet, dass** das Zusatzeingabemittel (7) ein Drucktaster ist.

3. Laserentfernungsmessgerät nach Anspruch 1 oder 2, **dadurch gekennzeichnet, dass** das Zusatzeingabemittel (7) mit dem zugeordneten, den Messvorgang auslösenden, Eingabemittel (4) logisch OR verknüpft ist.

4. Laserentfernungsmessgerät nach einem der Ansprüche 1 bis 3, **dadurch gekennzeichnet, dass** die Position des Zusatzeingabemittels (7) mit einer, optional leuchtenden, Markierung (9) auf der Deckfläche (6) sichtbar **gekennzeichnet** ist.
